# EUROPÄISCHE PATENTSCHRIFT

(11) **EP 2 934 957 B1**
(45) Veröffentlichungstag und Bekanntmachung des Hinweises auf die Patenterteilung: **22.02.2017**
(21) Anmeldenummer: 13826559.0
(22) Anmeldetag: 11.12.2013
(51) Int. Cl.: B60S 1/34

(54) **WISCHERHEBEL EINES KRAFTFAHRZEUGSCHEIBENWISCHERS**
WIPER LEVER OF A MOTOR VEHICLE WINDSHIELD WIPER
LEVIER D'ESSUIE-GLACE POUR UN ESSUIE-GLACE DE VÉHICULE AUTOMOBILE

(30) Priorität: 18.12.2012 DE 102012112526
(43) Veröffentlichungstag der Anmeldung: 28.10.2015
(73) Patentinhaber: Dr.Ing. H.C. F. Porsche Aktiengesellschaft, 70435 Stuttgart (DE)
(72) Erfinder: AUCH, Sven, 70327 Stuttgart (DE)
(86) Internationale Anmeldenummer: PCT/EP2013/003743
(87) Internationale Veröffentlichungsnummer: WO 2014/095006

(56) Entgegenhaltungen:
- EP-A1- 0 716 965
- DE-A1- 10 259 479
- DE-A1- 19 829 759
- US-A1- 2010 251 502

## Beschreibung

Die vorliegende Erfindung betrifft einen Wischerhebel eines Kraftfahrzeugscheibenwischers mit einem Wischerarm, einem Wischblatt und einer Abdeckung gemäß dem Oberbegriff des Anspruchs 1. Die Erfindung betrifft außerdem einen Scheibenwischer mit zumindest einem derartigen Wischerarm sowie ein Kraftfahrzeug mit einem solchen Scheibenwischer.

Aus der DE 10 2010 012 983 A1 ist ein gattungsgemäßer Wischerhebel mit einem Wischerarm, einem Wischblatt und einer Abdeckung bekannt. Der Wischerhebel umfasst dabei eine Nabe sowie einen Drehzapfen, der den Wischerarm mit der Nabe verbindet. Durch ein Anlagenpaar, welches koaxial mit dem Drehzapfen verbunden ist, werden Seitenwände des Wischerarms von der Nabe beabstandet. Die aus einem Stück geformte Abdeckung weist einen U-förmigen Querschnitt auf und schafft eine Basiswand, die sich über die gesamte Länge des Wischerarms und des Wischblatts erstreckt sowie der Quere nach beabstandete Seitenwände, die sich von der Basiswand abwärts erstrecken und den Wischerarm und das Wischblatt gleichermaßen vor der Sicht verbergen. Ein Einschnapplaschenpaar, das an der Abdeckung angeformt ist, reicht in einen Zwischenraum zwischen den Wischerarmseitenwänden und der Nabe hinein, um über eine Schnappverbindung an dem Anlagenpaar angebracht zu werden, so dass eine abnehmbare Anbringung der Abdeckung an dem Wischerhebel erfolgen kann. Hierdurch soll eine Abdeckung bereitgestellt werden können, die sowohl ästhetischen Ansprüchen genügt, als auch leicht abnehmbar ist.

Aus der EP 1 575 813 B1 ist ein Wischerhebel mit einem Wischerarm und einem Wischblatt bekannt, der mit dem Wischblatt gelenkfrei verbunden ist. Der Wischarm und das Wischblatt sind dabei zumindest teilweise einstückig ausgeführt. Von besonderer Bedeutung dabei soll sein, dass das Wischblatt zwischen seinen Wischblattenden mit dem Wischerarm über wenigstens ein federelastisches Querstück mit dem Wischblatt verbunden ist. Hierdurch soll insbesondere eine einfache und flachbauende Konstruktion mit vergleichsweise wenigen Bauteilen erzielt werden können.

EP 0 716 965 A offenbart eine Wischhebel eines Scheibenwischers gemäß dem ersten Teil des Anspruchs 1.

Die vorliegende Erfindung beschäftigt sich mit dem Problem, für einen Wischerhebel der gattungsgemäßen Art eine verbesserte Ausführungsform anzugeben, die sich insbesondere durch eine deutlich vereinfachte Konstruktion auszeichnet und darüber hinaus ohne bisher erforderliches Gelenk auskommt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem an sich bekannten Wischerhebel eines Scheibenwischers mit einem Wischerarm, einem Wischblatt und einer Abdeckung, nicht mehr wie bisher üblich, im Bereich des Wischerarms ein Gelenk vorzusehen, um den Wischerhebel von der Kraftfahrzeugscheibe abnehmen zu können, sondern den Wischerarm als Federschiene auszubilden, die aufgrund ihrer Elastizität einerseits das Wischblatt gegen die Kraftfahrzeugscheibe vorspannt und andererseits in der Lage ist, einen Hubwinkel des Wischerhebels beim Abnehmen desselben von der Kraftfahrzeugscheibe auszugleichen, das heißt ein Abheben des Wischerarms auszuhalten. Der Wischerarm ist dabei erfindungsgemäß als Federschiene ausgebildet, auf der ein mit dem Wischblatt verbundener Reiter längsverstellbar ist. Die Abdeckung wiederum ist derart mit dem Reiter verbunden und mit einer Wischerachse eines Scheibenwischers verbindbar, dass der Hubwinkel des Wischerhebels beim Abheben von der Kraftfahrzeugscheibe ausgeglichen werden kann. Dies ermöglicht einerseits eine einstückige Ausführung des Wischerarms und andererseits eine gleichfalls einstückige Ausführung der Abdeckung, wobei insbesondere auf ein bisher im Bereich der Abdeckung und/oder des Wischerarms vorgesehenes Gelenk verzichtet werden kann. Durch ein Entfallen dieses Gelenks kann der gesamte Wischerhebel nicht nur mit weniger Bauteilen und damit in der Konstruktion deutlich einfacher aufgebaut werden, sondern er lässt sich auch kostengünstiger herstellen. Aufgrund der Federschiene, die üblicherweise aus Metall ausgebildet ist, und der Abdeckung, die üblicherweise aus Kunststoff ausgebildet ist, kann einerseits ein vergleichsweise leichter Wischerhebel geschaffen werden, der andererseits jedoch eine vergleichsweise hohe Festigkeit aufweist, die insbesondere bei höheren Schneelasten oder in einer Waschanlage von großem Vorteil ist. Der erfindungsgemäße Wischerhebel besitzt somit die Festigkeit eines Wischerhebels aus Metall, jedoch mit dem Gewicht eines Wischerhebels aus Kunststoff oder geringer. Von besonderem Vorteil darüber hinaus ist, dass bei dem erfindungsgemäßen Wischerhebel keine bisher auftretenden Colour Matching-Probleme mehr zu befürchten sind. Im Vergleich zu einem Wischerhebel aus Metall ist der erfindungsgemäße Wischerhebel zudem kostengünstiger und leichter. Durch das Entfallen des Gelenks können auch die hier bislang auftretenden Korrosionsprobleme zuverlässig vermieden werden. Die Elastizität des Wischerarms bietet jedoch die Möglichkeit, das Wischblatt von der Kraftfahrzeugscheibe, beispielsweise einer Heckscheibe, abzuheben, wobei die Abdeckung dabei in der Lage ist, das Wischblatt über den Reiter längs des Wischerarms zu verschieben und somit den beim Abheben des Wischerhebels von der Kraftfahrzeugscheibe entstehenden Hubwinkel längenmäßig auszugleichen.

Zweckmäßig ist die Federschiene aus Metall ausgebildet und dient zugleich als Führungsschiene für den Reiter. Die Ausbildung der Federschiene aus Metall bietet den großen Vorteil, dass die für ein sauberes Wischen der Kraftfahrzeugscheibe erforderliche Anpresskraft des Wischblatts langfristig bereitgestellt werden kann und insbesondere ohne zusätzliche Federelemente. Darüber hinaus kann die Abdeckung aus Kunststoff ausgebildet sein, wodurch diese nicht nur vergleichsweise kostengünstig, sondern auch in nahezu beliebigen Farben herstellbar ist. Die Abdeckung ist dabei vorzugsweise derart ausgebildet, dass sie den Wischerarm verdeckt, insbesondere U-förmig umgreift. Selbstverständlich ist dabei die Abdeckung so lang ausgebildet, dass sie nicht nur den Wischerarm, sondern darüber hinaus auch die Wischerachse überdeckt, welche drehfest mit dem Wischerarm und drehfest mit einem Antrieb, beispielsweise einem Elektromotor, verbunden ist. Durch eine derartig ausgebildete Abdeckung kann der gesamte Wischerarm, die Wischerachse und zugleich noch ein Teil des Wischerblatts optisch ansprechend verkleidet werden.

Bei einer weiteren vorteilhaften Ausführungsform der erfindungsgemäßen Lösung ist das Wischblatt gelenkig am Reiter angebunden. Eine derartige gelenkige Anbindung des Wischblatts am Reiter ermöglicht eine Anpassung der Wischblattstellung an beispielsweise sich während der Wischbewegung verändernde Krümmungen der zu wischenden Kraftfahrzeugscheibe. Eine derartige gelenkige Anbindung ist bereits heute zwischen dem jeweiligen Wischblatt und dem Wischerarm vorgesehen. Selbstverständlich kann das Wischblatt selbst noch an einem federnden Wischerbügel angeordnet sein, der eine linienförmige Anlage des Wischblatts an der zu wischenden Kraftfahrzeugscheibe erzwingt bzw. zumindest begünstigt.

Zweckmäßig ist ein Befestigungsteil vorgesehen, über welches der Wischerarm drehfest mit der Wischerachse verbunden ist. Das Befestigungsteil kann dabei in der Art einer Nabe ausgebildet sein, die drehfest mit der Wischerachse, beispielsweise durch einen Formschluss, verbunden werden kann. Das Befestigungsteil kann dabei separat zum Wischerarm oder aber einstückig mit diesem ausgebildet sein. Besonders die letzte Ausführungsform bietet dabei den Vorteil der Reduzierung der einzelnen Bauteile, was zu einer Reduzierung der Lager- und Logistikkosten sowie zu einer Reduzierung des Montageaufwands führt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen erfindungsgemäßen Wischerhebel eines Scheibenwischers,
- Fig. 2: den Wischerhebel in einer Ansicht und verschiedene Schnittdarstellungen.

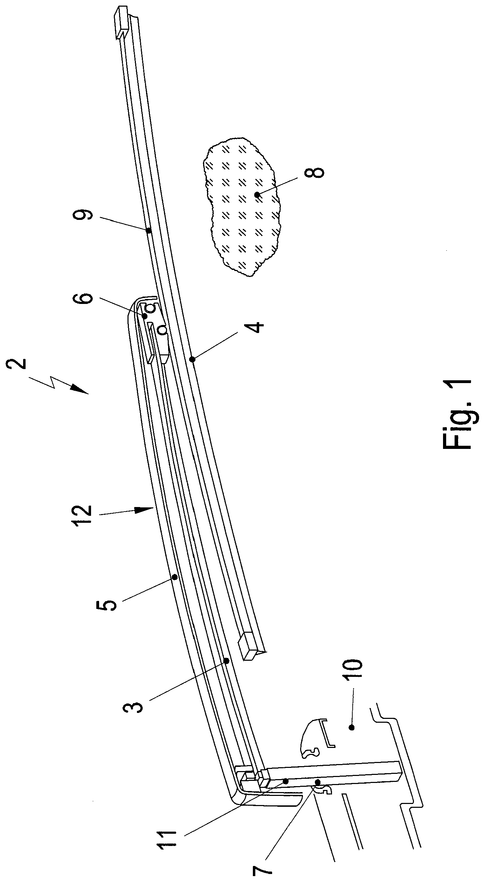

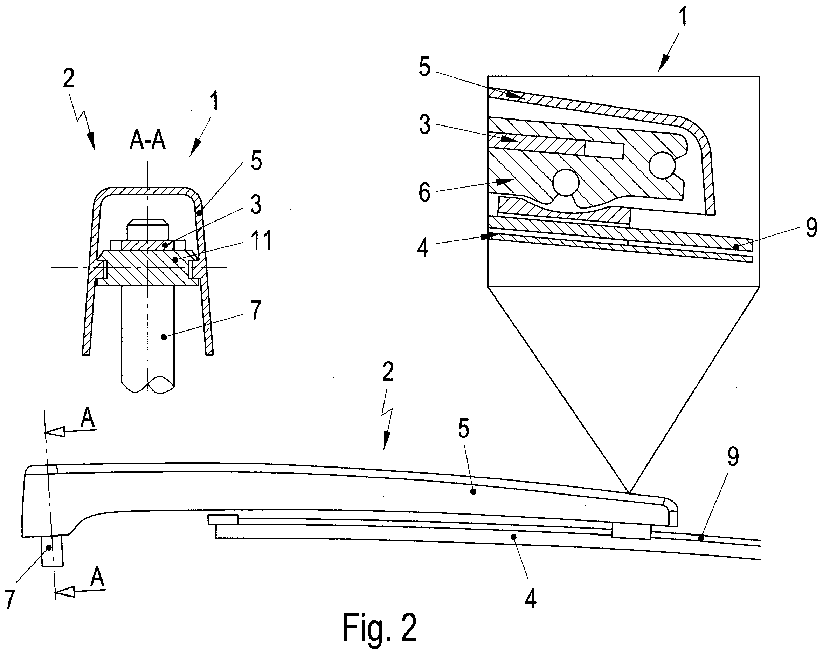

Entsprechend den Figuren 1 und 2, weist ein erfindungsgemäßer Wischerhebel 1 eines Scheibenwischers 2, insbesondere eines Heckscheibenwischers eines im übrigen nicht dargestellten Kraftfahrzeugs, einen Wischerarm 3, ein Wischblatt 4 sowie eine Abdeckung 5 auf. Der Wischerarm 3 ist dabei erfindungsgemäß als Federschiene ausgebildet, auf der ein mit dem Wischblatt 4 verbundener Reiter 6 längsverstellbar ist. Die Abdeckung 5 ist dabei derart mit dem Reiter 6 verbunden und mit einer Wischerachse 7 verbindbar bzw. verbunden, dass ein Hubwinkel des Wischerhebels 1 ausgleichbar ist. Mit dem erfindungsgemäßen Wischerhebel 1 ist somit das Vorsehen eines bisher erforderlichen Gelenks zum Abheben desselben von einer Kraftfahrzeugscheibe 8 nicht mehr erforderlich. Durch das Wegfallen eines derartigen Gelenks kann nicht nur ein Korrosionsproblem im Bereich des Gelenks vermieden werden, sondern der Wischerhebel 1 konstruktiv auch deutlich einfacher aufgebaut werden.

Der als Federschiene ausgebildete Wischerarm 3 ist dabei üblicherweise aus Metall ausgebildet und dient zugleich als Führungsschiene für den Reiter 6. Durch die metallische Ausbildung der Federschiene bewirkt diese einerseits die für einen optimalen Wischvorgang erforderliche Anpresskraft des Wischblatts 4 auf die Kraftfahrzeugscheibe 6, ermöglicht andererseits jedoch auch ein problemloses Abheben des Wischerhebels 1 von der Kraftfahrzeugscheibe 8. Die Abdeckung 5 ist vorzugsweise aus Kunststoff ausgebildet und dadurch nicht nur kostengünstig herzustellen, sondern auch in nahezu beliebigen Farben. Die Abdeckung 5 verdeckt dabei den Wischerarm 3 sowie zumindest einen Teil des Wischblatts 4 und die Wischerachse 7, wodurch ein äußerst ästhetischer Eindruck erzielt werden kann.

In der rechten oberen Schnittdarstellung der Fig. 2 erkennt man, dass der Wischerarm 3 gleitend im Reiter 6 entlang der Längsachse des Wischerarms 3 (Federschiene) verschiebbar gelagert ist und dadurch den durch das Anheben erforderlichen Längenausgleich ermöglicht. Das Wischblatt 4 ist darüber hinaus gelenkig am Reiter 6 angebunden und dadurch in der Lage, eventuell während der Wischbewegung auftretende Krümmungsänderungen der Kraftfahrzeugscheibe 8 auszugleichen. In gleicher Weise kann selbstverständlich auch noch ein Wischerbügel 9 ausgebildet sein, an dem das Wischblatt 4 angeordnet ist.

Der Scheibenwischer 2 besitzt darüber hinaus einen Antrieb 10, beispielsweise in der Art eines Elektromotors, der die Wischerachse 7 antreibt. Der Wischerarm 3 des Wischerhebels 1 ist dabei drehfest mit der angetriebenen Wischerachse 7 verbunden, wobei zur drehfesten Verbindung beispielsweise ein Befestigungsteil 11 vorgesehen sein kann. Das Befestigungsteil 11 kann dabei separat zum Wischerarm 3 oder einstückig mit diesem ausgebildet sein, wobei im letzten Fall die Teileanzahl reduziert und damit die Lager- und Logistikkosten sowie der Montageaufwand verringert werden können.

Die Abdeckung 5 ist vorzugsweise einstückig ausgebildet, insbesondere sogar U-förmig, und überdeckt neben dem Wischerarm 3 zusätzlich üblicherweise auch die Wischerachse 7.

Bei einem Abheben des Wischerhebels 1 von der Kraftfahrzeugscheibe 8, beispielsweise einer Heckscheibe, wird der elastische und als Federschiene ausgebildete Wischerarm 3 elastisch verbogen, wobei gleichzeitig durch eine Kopplung der Abdeckung 5 mit dem Reiter 6 dieser entlang des Wischerarms 3 in Richtung der Wischerachse 7 verschoben wird, um einen Hubwinkel auszugleichen.

Mit dem erfindungsgemäßen Wischerhebel 1 kann insbesondere Gewichtsreduzierung sowie eine Reduzierung der Teilevielfalt reduziert werden, wobei trotzdem eine im Vergleich zu einem aus Kunststoff ausgebildeten Wischerhebel erhöhte Festigkeit erreicht werden kann, was insbesondere bei Schneelast und in Waschanlagen von Vorteil ist. Die bisher auftretenden Colour Matching- und Vergrauungsprobleme können ebenfalls vermieden werden, da nunmehr lediglich ein einziges aus Kunststoff ausgebildetes Bauteil, nämlich die Abdeckung 5 vorhanden ist. Besonders der Entfall des bisher erforderlichen Gelenks macht den erfindungsgemäßen Wischerhebel 1 konstruktiv äußerst einfach.

## Patentansprüche

1. Wischerhebel (1) eines Scheibenwischers (2), insbesondere eines Heckscheibenwischers, mit einem Wischerarm (3), einem Wischblatt (4) und einer Abdeckung (5), **dadurch gekennzeichnet, dass** der Wischerarm (3) als Federschiene ausgebildet ist, auf der ein mit dem Wischblatt (4) verbundener Reiter (6) längsverstellbar ist, und dass die Abdeckung (5) derart mit dem Reiter (6) verbunden und mit einer Wischerachse (7) verbindbar ist, dass ein Hubwinkel des Wischerhebels (1) ausgleichbar ist.

2. Wischerhebel nach Anspruch 1, **dadurch gekennzeichnet, dass** die Federschiene aus Metall ausgebildet ist und als Führungsschiene für den Reiter (6) dient.

3. Wischerhebel nach Anspruch 1 oder 2, **dadurch gekennzeichnet, dass** die Abdeckung (5) aus Kunststoff ausgebildet ist.

4. Wischerhebel nach einem der Ansprüche 1 bis 3, **dadurch gekennzeichnet, dass** die Abdeckung (5) den Wischerarm (3) verdeckt, insbesondere U-förmig umgreift.

5. Wischerhebel nach einem der vorhergehenden Ansprüche, **dadurch gekennzeichnet, dass** das Wischblatt (4) gelenkig am Reiter (6) angebunden ist.

6. Scheibenwischer (2) eines Kraftfahrzeugs, insbesondere ein Heckscheibenwischer, mit zumindest einem Wischerhebel (1) nach einem der vorhergehenden Ansprüche, wobei der Wischerarm (3) des Wischerhebels (1) drehfest mit einer angetriebenen Wischerachse (7) verbunden ist.

7. Scheibenwischer nach Anspruch 6, **dadurch gekennzeichnet, dass** ein Befestigungsteil (11) vorgesehen ist, über welches der Wischerarm (3) drehfest mit der Wischerachse (7) verbunden ist.

8. Scheibenwischer nach Anspruch 7, **dadurch gekennzeichnet, dass** das Befestigungsteil (11) separat zum Wischerarm (3) oder einstückig mit diesem ausgebildet ist.

9. Scheibenwischer nach einem der Ansprüche 6 bis 8, **dadurch gekennzeichnet, dass** die Abdeckung (5) einstückig ausgebildet ist und neben dem Wischerarm (3) auch die Wischerachse (7) überdeckt.

10. Kraftfahrzeug mit einem Scheibenwischer (2) nach einem der Ansprüche 6 bis 9.

## Claims

1. Wiper lever (1) of a windshield wiper (2), in particular a rear window wiper, with a wiper arm (3), a wiper blade (4) and a covering (5), **characterized in that** the wiper arm (3) is designed as a spring rail on which a slider (6), which is connected to the wiper blade (4), is longitudinally adjustable, and **in that** the covering (5) is connected to the slider (6) and is connectable to a wiper spindle (7) in such a manner that an angle of lift of the wiper arm (1) can be compensated for.

2. Wiper lever according to Claim 1, **characterized in that** the spring rail is formed from metal and serves as a guide rail for the slider (6).

3. Wiper lever according to Claim 1 or 2, **characterized in that** the covering (5) is formed from plastic.

4. Wiper lever according to one of Claims 1 to 3, **characterized in that** the covering (5) conceals the wiper arm (3), in particular engages around same in a U-shaped manner.

5. Wiper lever according to one of the preceding Claims, **characterized in that** the wiper blade (4) is connected in an articulated manner to the slider (6).

6. Windshield wiper (2) of a motor vehicle, in particular a rear window wiper, with at least one wiper lever (1) according to one of the preceding claims, wherein the wiper arm (3) of the wiper lever (1) is connected to a driven wiper spindle (7) for rotation therewith.

7. Windshield wiper according to Claim 6, **characterized in that** a fastening part (11) is provided via which the wiper arm (3) is connected to the wiper spindle (7) for rotation therewith.

8. Windshield wiper according to Claim 7, **characterized in that** the fastening part (11) is formed separately from the wiper arm (3) or integrally therewith.

9. Windshield wiper according to one of Claims 6 to 8, **characterized in that** the covering (5) is formed integrally and also covers the wiper spindle (7) in addition to the wiper arm (3).

10. Motor vehicle with a windshield wiper (2) according to in one of Claims 6 to 9.

## Revendications

1. Levier d'essuie-glace (1) pour un essuie-glace (2), en particulier un essuie-glace de vitre arrière, comprenant un bras d'essuie-glace (3), un balai d'essuie-glace (4) et un recouvrement (5), **caractérisé en ce que** le bras d'essuie-glace (3) est réalisé sous forme de rail élastique sur lequel un cavalier (6) connecté au balai d'essuie-glace (4) peut être déplacé longitudinalement, et **en ce que** le recouvrement (5) est connecté au cavalier (6) et peut être connecté à un axe d'essuie-glace (7) de telle sorte qu'un angle de levage du levier d'essuie-glace (1) puisse être compensé.

2. Levier d'essuie-glace selon la revendication 1, **caractérisé en ce que** le rail élastique est réalisé en métal et sert de rail de guidage pour le cavalier (6).

3. Levier d'essuie-glace selon la revendication 1 ou 2, **caractérisé en ce que** le recouvrement (5) est réalisé en plastique.

4. Levier d'essuie-glace selon l'une quelconque des revendications 1 à 3, **caractérisé en ce que** le recouvrement (5) recouvre le bras d'essuie-glace (3), en particulier vient en prise en forme de U autour de celui-ci.

5. Levier d'essuie-glace selon l'une quelconque des revendications précédentes, **caractérisé en ce que** le balai d'essuie-glace (4) est raccordé de manière articulée au cavalier (6).

6. Essuie-glace (2) d'un véhicule automobile, en particulier essuie-glace de vitre arrière, comprenant au moins un levier d'essuie-glace (1) selon l'une quelconque des revendications précédentes, le bras d'essuie-glace (3) du levier d'essuie-glace (1) étant connecté de manière solidaire en rotation à un axe d'essuie-glace entraîné (7).

7. Essuie-glace selon la revendication 6, **caractérisé en ce qu'**une pièce de fixation (11) est prévue, par le biais de laquelle le bras d'essuie-glace (3) est connecté de manière solidaire en rotation à l'axe d'essuie-glace (7).

8. Essuie-glace selon la revendication 7, **caractérisé en ce que** la pièce de fixation (11) est réalisée séparément du bras d'essuie-glace (3) ou est réalisée d'une seule pièce avec celui-ci.

9. Essuie-glace selon l'une quelconque des revendications 6 à 8, **caractérisé en ce que** le recouvrement (5) est réalisé d'une seule pièce et recouvre également l'axe d'essuie-glace (7) en plus du bras d'essuie-glace (3).

10. Véhicule automobile comprenant un essuie-glace (2) selon l'une quelconque des revendications 6 à 9.
